# EUROPEAN PATENT APPLICATION

(11) **EP 3 866 430 A1**
(43) Date of publication of application: **18.08.2021**
(21) Application number: 20157338.3
(22) Date of filing: 14.02.2020
(51) Int. Cl.: H04L 29/06, H04L 12/707

(54) **MULTI-CONNECTIVITY CAPABLE NETWORK DEVICE AND COMMUNICATION SYSTEMS FOR CENTRALLY CONTROLLING MULTIPLE ACCESS OF A MULTI-CONNECTIVITY CAPABLE CUSTOMER EQUIPMENT TO A DATA NETWORK AND/OR TO SERVICES PROVIDED BY THE DATA NETWORK**

(71) Applicant: Deutsche Telekom AG, 53113 Bonn (DE)
(72) Inventor: AMEND, Markus, 63667 Nidda (DE); BOGENFELD, Eckard, 67316 Carlsberg (DE)
(74) Representative: Blumbach · Zinngrebe Patentanwälte PartG mbB

(57) **Abstract**

The present invention relates inter alia to a multi-connectivity capable network device (80) for centrally controlling multiple access of a multi-connectivity capable customer equipment (20) to a data network (90) and/or to services provided by the data network, wherein the network device (80) is configured to centrally control, in response to control instructions stored in the network device (80) and associated with a first access interface (44) and a second access interface (45) of a multi-connectivity capable customer equipment (20), the access of a multi-connectivity capable customer equipment (20) to a data network (90) and/or to services provided by the data network, wherein
the multi-connectivity capable network device (80) comprises at least one access network interface (82) configured to enable connection to a first access network (50) and to a second access network (60) and a network interface (84) configured to enable connection to a data network (90).

## Description

### Technical Field

The present invention relates to a multi-connectivity capable network device and to communication systems for centrally controlling multiple access of a multi-connectivity capable customer equipment to a data network and/or to services provided by the data network, wherein the data network may be the Internet.

### Background

The Internet has developed into a ubiquitous communication system accessible through multiple access technologies, which, inter alia, provides a huge amount of data to end users. As a result, great efforts are undertaken with respect to multi-connectivity or multipath solutions for aggregation and improved traffic balancing by using different access technologies.

Different approaches are pursued to provide customers multiple types of access technologies to get access to the internet. One approach is the combination of a fixed access network like DSL and a mobile access network like LTE, which connect at least a hybrid customer premises equipment (HCPE) to a hybrid access gateway (HAG) of an ISP. This approach is described in BBF, "Hybrid Access Broadband Network Architecture", TR-348, July 2016.

An alternative approach is described for example in 3GPP, "System Architecture for the 5G System (Release 15)", TR 23.793 February 2017. This system architecture supports mobile devices having two different wireless access interfaces in getting multiple access via a 3GPP access network like LTE or 5G and an untrusted non-3GPP access network like DSL to the internet by using a multi-connectivity termination point with a user plane functionality (UPF).

### Summary of the invention

It is an object of the present invention to provide a multi-connectivity capable network device and communication systems for centrally controlling multiple access of at least one multi-connectivity capable custom equipment to a data network and/or to services provided by the data network without any modification on the multi-connectivity capable customer equipment.

The technical problem mentioned above is solved by the features of independent claims 1, 7 and 11.

An aspect of the invention can be seen in that that a multi-connectivity capable customer equipment can be connected over different access interfaces and different access networks to a multi-connectivity termination point which centrally controls multiple access of the customer equipment via different access networks to a data network like the Internet and/or services provided by the data network. In case of 5G ATSSS multi-connectivity termination point is a UPF-ATSSS network device and in case of a hybrid access architecture it can be implemented in a hybrid access gateway. The multi-connectivity termination point is also called a multi-connectivity capable network device, which is preferably operated by an ISP.

A further preferable aspect of the present invention may be to perform centrally a parental controlled access limiting functionality by a multi-connectivity capable network device, which gives parents the chance to easily manage children's internet access independent on the access type and user equipment, which is used. With other words: No specific app has to be installed in a user equipment.

A still further aspect of the present invention may be seen in implementing an overarching access control functionality in a multi-connectivity capable network device, which centrally controls every possible connectivity/access of a multi-connectivity capable user equipment towards the internet. This can be exploited by setting overarching time, volume, speed or service limitations for e.g. parental control in the multi-connectivity capable network device of a service provider network itself, without any application or modification on the customer equipment.

In particular, central access and service steering according to the present invention considers the individual access type of a multiple or multi-connectivity access system. Based on the access type, e.g. fixed or mobile access network technology, different access and/or service limitations can be set. For example, it can be differentiated, if a multi-connectivity customer equipment is connected over a cellular access interface, a Wi-Fi access interface or both access interfaces. According to respective access limitation policies, it might be applied that services are declined or reduced in speed. Furthermore, the usage of an access interface and an access network, respectively, can be declined according to a parental control functionality which for example gives one hour access over cellular access interface per day and two hour access over a Wi-Fi access interface or to a total time for the combined usage of a respective multi-connectivity capable customer equipment.

Independent of any mentioned use cases like 5G ATSSS and hybrid access networks, the present invention can be realized in any network architecture, which provides access over multiple access technologies and exploits a converged user plane implemented in a multi-connectivity capable network device of an ISP.

The multiple access of a multi-connectivity capable customer equipment to a data network and/or to services provided by the data network can be centrally controlled or limited on the following basis: e.g. per time, volume, service, user equipment, account, budget, access type or any combination of these parameters.

An access configuration, e.g. different access control rules, can be applied from the network operator of the multi-connectivity capable network device, may be based on tariff information. Another option may provide an interface (API) for external configuration of access limitations by a client device or a customer web interface.

In the claims and the description the expressions "multi-connectivity capable network device" and "multi-connectivity capable customer equipment" mean in particular the capability that the multi-connectivity customer equipment and the multi-connectivity capable network device are configured to communicate via different paths or different communication links of a single session. The different paths or different communication links can be, for example, established over different access networks or over a common access network.

### Brief description of the drawings

Preferred embodiments of the invention are described in detail with respect to the following figures, wherein:
- Fig. 1: shows an exemplary communication system according to the invention, which exploits a hybrid access network architecture,
- Fig. 2: shows an alternative exemplary communication system according to the invention, which exploits different access technologies based on 3GPP ATSSS,
- Fig. 3: shows an alternative exemplary communication system comprising a single access network, which provides a multi-connectivity access.

### Detailed description of embodiments

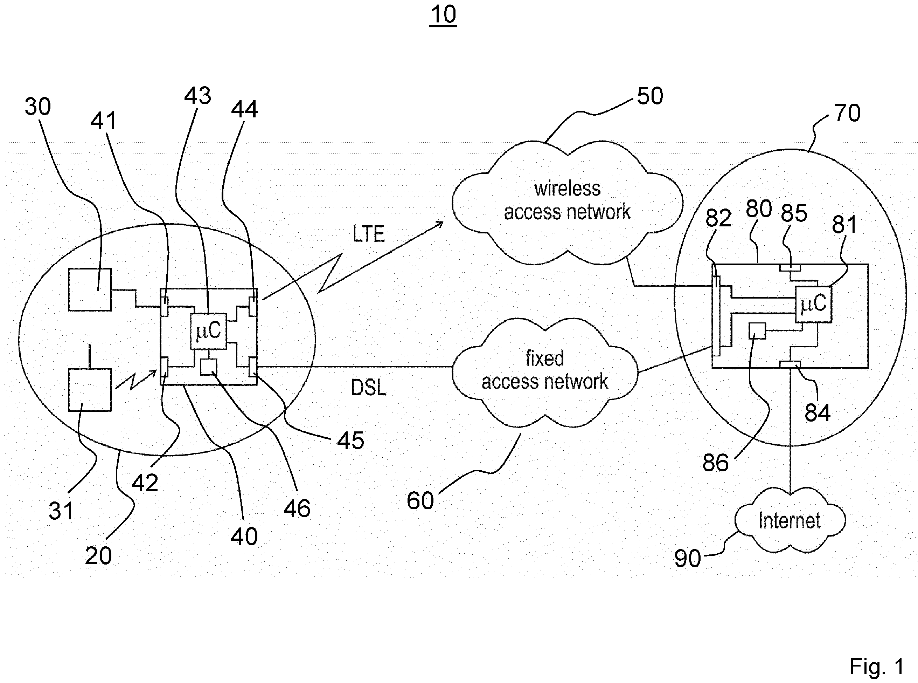

Fig. 1 depicts an exemplary communication system 10 based on a hybrid access architecture for centrally controlling multiple or multi-connectivity access of at least one multi-connectivity capable customer equipment 20 to a data network 90 and/or to services provided by the data network 90. This is realized by using a multi-connectivity network device 80, which can be implemented in an ISP network 70. In particular, the data network 90 is the Internet, which can be connected via a network interface 84 to the network device 80. For the sake of better understanding, only one multi-connectivity capable customer equipment 20 is illustrated.

The multi-connectivity capable customer equipment 20 comprises at least a first access interface 44 and a second access interface 45. Preferably, the first access network interface 44 is a 3GPP based wireless access network interface, e.g. a LTE or 5G based wireless access interface, whereas the second access interface 45 is, for example, a fixed access interface, in particular a DSL or fiber based access interface. As shown in Fig. 1, the multi-connectivity capable customer equipment 20 may comprise a multi-connectivity capable coupling device 40, which includes the first access interface 44 and the second access interface 45. Furthermore, the customer equipment 20 may comprise a fixed-line end user device 30 and/or a mobile end user device 31. The coupling device 40 can comprise a fixed-line interface 41 and/or a Wi-Fi based interface 42, wherein the fixed-line interface 41 is connected by wire to the fixed-line end user device 30 and the Wi-Fi based interface 42 is adapted to communicate via air with a Wi-Fi interface of the mobile end user device 31. The coupling device 40 can be realized as a router. In addition, the coupling device 40 comprises a control unit 43, e.g. a microcontroller, which is adapted to perform a bundling software stored in the coupling device 40 to steer data transmission by selecting one of the access interfaces 44 and 45 or by using both access interfaces 44 and 45 simultaneously. For example, the multipath TCP (MPTCP) network communication protocol can be used as the bundling software. The bundling software and a firmware may be stored in a memory 46 of the coupling device 40.

In order to obtain multiple access to the data network 90 via the multi-connectivity capable network device 80, the coupling device 40 is adapted to be connected via a wireless access network 50, e.g. a LTE or 5G wireless access network, and a fixed access network 60 to the multi-connectivity capable network device 80. Therefore, the multi-connectivity capable network device 80 comprises at least one network interface 82, which terminates both the wireless access network 50 and the fixed access network 60. It should be noted that the multi-connectivity capable network device 80 may comprise for example two separate network interfaces, each terminating the wireless access network 50 and the fixed access network 60, respectively.

In addition, the network device 80 comprises a control unit 81, e.g. a microcontroller, which is adapted to perform a bundling software to steer data transmission from the data network 90 to the customer equipment 20 by selecting the wireless access network 50 and/or the fixed access network 60 or by selecting none of the access networks 50 and 60 in response to specific control instructions associated with the customer equipment 20. With other words: The microcontroller 81 is adapted to centrally control, in response to the control instructions stored in the network device 80 and associated with the customer equipment 20, the access of the at least one customer equipment 20 to the data network 90 and/or to services provided by the data network 90 by using the wireless access network 50 and/or the fixed access network 60 or none of the access networks 50, 60, i.e. blocking data transmission to the customer equipment 20 and thus blocking completely access to the data network 90. The specific control instructions, a firmware and the bundling software may be stored in a memory 86. The control instructions define multiple access rules for centrally controlling multiple access of the customer equipment 20 to the data network 90. For example, the multipath TCP (MPTCP) network communication protocol can be used as the bundling software. The control instructions associated with the customer equipment 20 may include service dependent control instructions and/or access network dependent control instructions and or time based control instructions and/or data volume based control instructions. Service dependent control instructions may define at least one specific service, which is open or blocked for access. Access network dependent control instructions may define which access network, i.e. the wireless access network 50 and/or the fixed access network 60, can be used for an Internet access of the customer equipment 20. Time based control instructions may define at least one time periode during which the customer equipment 20 obtains access or non-access to the data network 90.

It should be noted, that the control instructions and the respective access configuration, respectively, may be set by the ISP or by the user of the customer equipment 20. For example, a user may be connected to an interface 85 of the network device 80 to deliver the respective control instructions to the network device 80.

In order to perform the multiple access control instructions associated with the customer equipment 20, preferably the coupling device 40 and/or the end user devices 30 and 31 have to be registered on the internet service provider network 70 and in particular in the network device 80. As a result, the network device 80 is now able to identify the customer equipment 20 once it will obtain access to the data network 90 and to perform the control instructions associated with that customer equipment 20.

In an exemplary use case, the control instructions associated with the customer equipment 20 and preferably with the end user device 30 have been set by the parents to the following internet access limitations:
i) Access time from 6pm to 8pm, use of both access networks 50 and 60 and thus of both interfaces 44 and 45 to get multiple access to the data network 90, but only to predefined internet services.
ii) Access time from 8am to 6pm; only use via fixed access network 50 to data network 90, but only to predetermined services.
iii) Any request for getting access to the data network 90 generated by the end user device 30, which lies outside the defined access times is denied by the network device 80.

Any other appropriate policy rules for centrally controlling multiple access of the end user 30 can be stored in the memory 86 of network device 80.

Now it is assumed, that it is 7pm and the user of the end device 30 will play an online game.

When the user of the customer equipment 20 is trying to obtain multiple access to the data network 90, coupling device 40 is preferably adapted to establish simultaneously
i) a communication link via its wireless access interface 44 and the wireless access network 60 and
ii) a communication link via its fixed access interface 45 and the fixed access network 50 to the network device 80.

Now, the network device 80 receives a respective internet access request message from the end user device 30 and the coupling device 40, respectively, which contains inter alia an information identifying the end user device 30 and the coupling device 40, respectively. In particular, the information tells the network device 80, that the customer equipment 20 comprises a wireless access interface 44 and a fixed access interface 45.

In response to the stored control information associated with the customer equipment 20 and the current time, the network device 90 allows multiple access to the data network 90 and to the online game by using both access networks 50 and 60. Once the time limit of 8pm is achieved the access to the data network 90 is dropped by the network device 80.

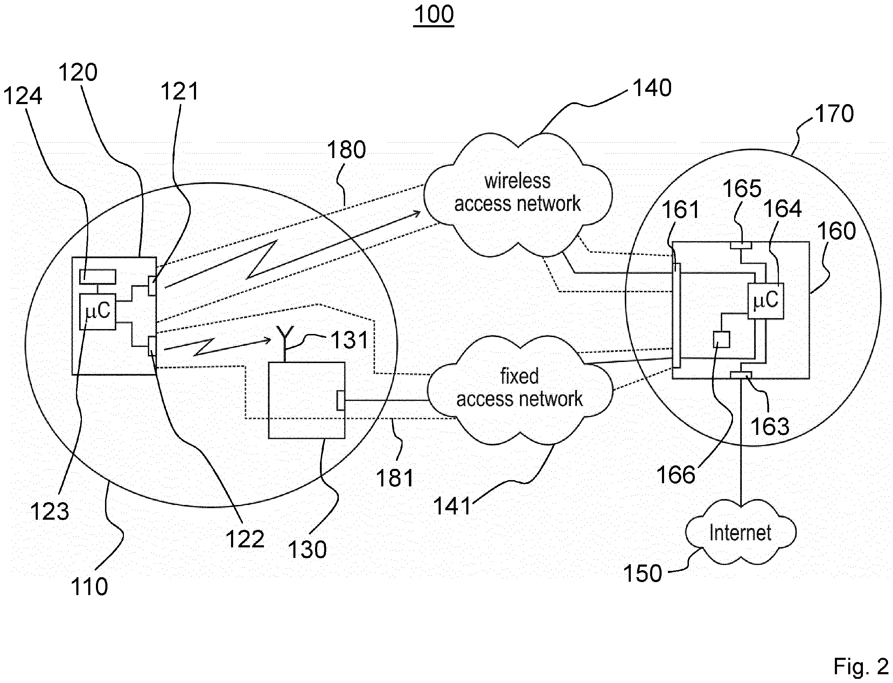

In Fig. 2 an alternative communication system 100 is depicted which exploits instead of a hybrid access network architecture as shown in Fig. 1 a fixed mobile convergence access network architecture according to 3GPP ATSSS.

The exemplary communication system 100 is capable of centrally controlling multiple or multi-connectivity access of at least one multi-connectivity capable customer equipment 110 to a data network 150 and/or to services provided by the data network 150 by using a multi-connectivity network device 160, which can be implemented in an ISP network 170. It is noted, that the network device 160 can be substantially identical in construction and function to network device 80. Preferably, the data network 150 is the internet, which can be connected via a network interface 163 to the network device 160. For the sake of better understanding, only one customer equipment 110 is illustrated.

The multi-connectivity capable customer equipment 110 comprises a mobile device 120, e.g. a mobile phone, and a coupling device 130, which may be a router. The mobile device 120 comprises preferably two different wireless access interfaces, namely a 3GPP based wireless access interface 121 and a Wi-Fi based wireless access interface 122. Preferably, wireless access network interface 121 is a LTE or 5G based wireless access interface.

As shown in Fig. 2, the coupling device 130 comprises a Wi-Fi based interface 131, which is adapted to communicate via air with the Wi-Fi access interface 122 of the mobile end user device 120. In addition, the mobile device 120 comprises a control unit 123, e.g. a microcontroller, which is adapted to perform a bundling software stored in mobile device 120 to steer data transmission by selecting one of the wireless access interfaces 121 and 122 or by using both access interfaces 121 and 122 simultaneously. For example, the multipath TCP (MPTCP) network communication protocol can be used as the bundling software. The bundling software can be stored in a storage 124 of the mobile device 120.

In order to obtain multiple access to the data network 150 via the multi-connectivity capable network device 160, the mobile end user device 120 is adapted to be connected via a wireless access network 140, e.g. a LTE or 5G wireless access network, and/or via a fixed access network 141 to the multi-connectivity capable network device 160. Therefore, network device 160 comprises at least one network interface 161, which terminates the wireless access network 140 and the fixed access network 141. It should be noted that the multi-connectivity capable network device 160 may comprise for example two separate network interfaces, each terminating the wireless access network 140 and the fixed access network 141, respectively. In addition, the network device 160 comprises a control unit 164, e.g. a microcontroller, which is adapted to perform a bundling software to steer data transmission from the data network 150 to the customer equipment 110 by selecting the wireless access network 140 and/or the fixed access network 141 or by blocking both access networks 140 and 141 for data transmission to the customer equipment 110 in response to specific control instructions associated with the customer equipment 110 and the mobile device 120, respectively. With other words: The microcontroller 164 is adapted to centrally control, in response to the control instructions stored in the network device 160 and preferably associated with the 3GPP based access interface 121 and the Wi-Fi based access interface 122 of the mobile device 120, the access of the at least one mobile device 120 to the data network 150 and/or to services provided by the data network 150.

The specific control instructions, a firmware and the bundling software may be stored in a memory 166. The control instructions define multiple access rules for centrally controlling multiple access of the mobile device 120 and the customer equipment 110, respectively, to the data network 150. For example, the multipath TCP (MPTCP) network communication protocol can be used as the bundling software. The control instructions associated with the customer equipment 110 and the mobile device 120, respectively, may include service dependent control instructions and/or access network dependent control instructions and or time based control instructions and/or data volume based control instructions.

It should be noted, that the control instructions and the respective access configuration, respectively, can be set by the ISP or preferably by the user of the customer equipment 110. Therefore, the user can be connected to an interface 165 of the network device 160 to deliver the respective control instructions to the network device 160.

In order to perform the multiple access control instructions associated with the customer equipment 110, preferably mobile device 120 and/or the coupling device 130 have to be registered in the internet service provider network 170 and in particular in the network device 160. As a result, the network device 160 is now able to identify the customer equipment 110 and the mobile device 120, respectively, once it will obtain access to the data network 150 and to perform the control instructions associated with that customer equipment 110.

In an exemplary use case, the control instructions associated with the customer equipment 110 and preferably with the mobile device 120 have been set by the parents to the following internet access limitations:
i) Access time from 6pm to 8pm, use of both access networks 140 and 141 and thus of both interfaces 121 and 122 to get multiple access to the data network 150, but only to predefined internet services.
ii) Access time from 8am to 6pm; only use of Wi-Fi access interface 122 and the fixed access network 140 to data network 150, but only to predetermined services.
iii) Any request for getting access to the data network 150 generated by the end user device 120, which lies outside the defined access times, is denied by the network device 160.

Each other policy rules for centrally controlling multiple access of the mobile device 120 can be stored in the memory 166 of network device 160.

Now, it is assumed that it is 7pm and the user of the mobile device 120 will play an online game.

When the user of the mobile device 120 is trying to obtain multiple access to the data network 150, mobile device 120 is preferably adapted to establish simultaneously i) a communication link via its wireless access interface 121 and the wireless access network 140 and ii) a communication link via its Wi-Fi access interface 122 and the fixed access network 141 to the network device 160.

Now, the network device 160 receives a respective internet access request message from the end user device 120 and the coupling device 130, respectively, which contains inter alia an information identifying the end user device 120 and the coupling device 130, respectively.

In response to the stored control information associated with the customer equipment 120 and the current time, the network device 160 allows multiple access to the data network 150 and the online game by using both access networks 140 and 141. Once the time limit of 8pm is achieved the access to the data network 150 is dropped by the network device 160.

It should be noted, that both mobile end device 120 and the multi-connectivity capable network device 160 are capable of establishing tunneled communication links 180 and 181 via the wireless access network 141 and the fixed access network 140. Therefore, a respective tunneling software may be stored for example in memory 124 of the mobile device 120 and for example in memory 166 of the network device 160.

When using a tunneling technology, for example a first and a second virtual access interface are used by the mobile end device 120, which are preferable generated in a firmware stored in memory 124. The first virtual access interface may be associated with the wireless access interface 121 and the second virtual access interface may be associated with the Wi-Fi access interface 122. The first virtual access interface is used as a termination point of a tunneled communication link over the wireless access network 140, whereas the second virtual access interface is used as a termination point of a tunneled communication link over the fixed access network. The network device 160 may use also a first and a second virtual network interface as termination point of a tunneled communication link via the wireless access network 140 and as a termination point of a tunneled communication link via the fixed access network 141, respectively. The virtual network interfaces may be implemented in a firmware stored in memory 166 of the network device 160. In this case, the network device 160, e.g. the microcontroller 81 centrally controls access of the mobile end 120 to the Internet 150 by selecting the first virtual network interface and/or the second virtual network interface or none of the virtual network interfaces.

Such a tunnel technology can also be exploited by the communication system 10.

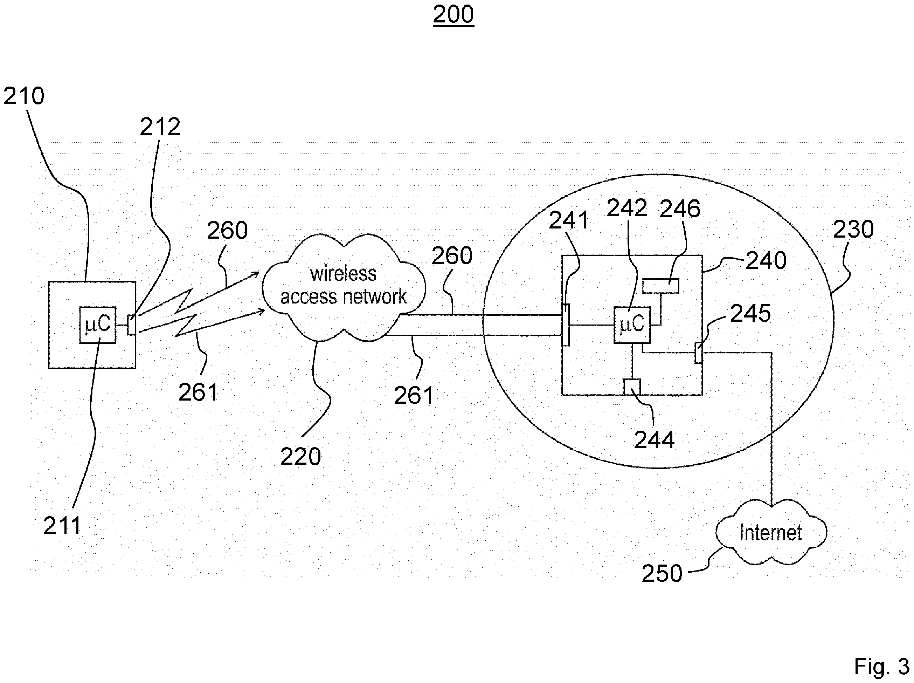

In Fig. 3 an alternative communication system 200 is depicted which exploits at least one access network. In the present case a single 3GPP based wireless access network 220 is implemented.

The exemplary communication system 200 is capable of centrally controlling multiple or multi-connectivity access of at least one multi-connectivity capable customer equipment 210 to a data network 250 and/or to services provided by the data network 250 by using a multi-connectivity network device 240, which can be implemented in an ISP network 230. It is noted, that the network device 160 can be substantially identical in construction and function to network device 80. Preferably, the data network 250 is the internet, which can be connected via a network interface 243 to the network device 240. For the sake of better understanding, only one customer equipment 210 is illustrated. In the present case, the multi-connectivity capable customer equipment 210 is a mobile phone.

The mobile phone 210 comprises at least one wireless access interfaces, preferable a 3GPP based wireless access interface 212. In addition, the mobile device 210 comprises a control unit 211, e.g. a microcontroller, which is adapted to perform a bundling software stored in mobile device 210 to steer single path or multipath data transmission. For example, the multipath TCP (MPTCP) network communication protocol can be used as the bundling software.

In order to obtain multiple or multi-connectivity access to the data network 250 via the multi-connectivity capable network device 240, the mobile phone 210 is adapted to be connected via the wireless access network 220 to the multi-connectivity capable network device 240. Therefore, network device 240 comprises at least a multi-connectivity capable network interface 241, which terminates the wireless access network 220. In addition, the network device 240 comprises a control unit 242, e.g. a microcontroller, which is adapted to perform a bundling software to steer data transmission from the data network 250 to the mobile phone 210 by using a single path or multiple paths in response to specific control instructions associated with the customer equipment 210. With other words: The microcontroller 242 is adapted to centrally control, in response to the control instructions stored in the network device 240 and associated with the mobile phone 210 the access of the at least one mobile device 210 to the data network 240 and/or to services provided by the data network 240.

It should be noted, that the multi-connectivity access technology used by the use equipment 20, 110 and 210 and the network device 80, 160 and 240 may be implemented in layer 2, 3, or 4 of the OSI reference model.

The specific control instructions and the bundling software may be stored in a memory 246. The control instructions define multiple access rules for centrally controlling multiple access of the mobile device 210 to the data network 250. For example, the multipath TCP (MPTCP) network communication protocol can be used as the bundling software. The control instructions associated with the mobile device 210 may include service dependent control instructions and/or access network dependent control instructions and or time based control instructions and/or data volume based control instructions.

It should be noted, that the control instructions and the respective access configuration, respectively, can be set by the ISP or preferably by a user. Therefore, the user can be connected to an interface 244 of the network device 240 to deliver the respective control instructions to the network device 240.

In order to perform the multiple access control instructions associated with the mobile phone 210, preferably the mobile device 210 has to be registered in the internet service provider network 230 and in particular in the network device 240. As a result, the network device 240 is now able to identify the mobile phone 210, once it will obtain access to the data network 250 and to perform the control instructions associated with that mobile phone 210.

In an exemplary use case, the control instructions associated with the mobile phone 21 have been set by the parents to the following internet access limitations:
i) Access time from 6pm to 8pm, use of two communication links 260, 261 to get multiple access to the data network 250, but only to predefined internet services.
ii) Access time from 8am to 6pm; use of only one communication link to get access to data network 250, but only to predetermined services.
iii) Any request for getting access to the data network 250 generated by user of the mobile phone 210, which lies outside the defined access times, is denied by the network device 240.

Each other policy rules for centrally controlling multiple access of the mobile device 210 can be stored in the memory 246 of network device 240.

Now, it is assumed that it is 7pm and the user of the mobile device 210 will play an online game.

When the user of the mobile device 210 is trying to obtain multiple access to the data network 250, mobile device 210 is preferably adapted to establish simultaneously i) a communication link 260 and a communication link 261 via its wireless access interface 212 and the wireless access network 220.

Now, the network device 240 receives a respective internet access request message from the mobile end user device 210, which contains inter alia an information identifying the mobile phone 210.

In response to the stored control information associated with the mobile phone 210 and the current time, the network device 240 allows multiple access to the data network 250 and the online game by using both communication links 260 and 261 via the wireless access network 220. Once the time limit of 8pm is achieved the access to the data network 250 is dropped by the network device 240.

It should be noted that the network device 240 is preferably configured to
i) deny, with respect to the at least one multi-connectivity capable mobile phone 210, access to the data network 250 completely or to
ii) allow, with respect to the at least one multi-connectivity capable mobile phone 210, access to the data network 250 by using one of the communication links 260, 261 or by using both communication links 260 and 261. In the latter case the data rate associated with each communication link can be adjusted selectively by the network device 240. Preferably, each data rate is higher than 0 bps.

Furthermore, it should be noted, that the mobile phone 210 and the multi-connectivity capable network device 240 are capable of establishing tunneled communication links via the wireless access network 220. Therefore, a respective tunneling software may be stored on the mobile device 210 and the network device 240.

At least some of the exemplary aspects illustrated above are summarized now.

According to a preferred aspect, a multi-connectivity capable network device 80, 160 (see Fig. 1 and Fig 2, respectively) is provided for centrally controlling multiple access of a multi-connectivity capable customer equipment 20, 110 to a data network 90, 150 and/or to services provided by the data network, wherein the multi-connectivity capable network device 80, 160 is configured to centrally control, in response to control instructions stored in the multi-connectivity capable network device 80, 160 and associated with a multi-connectivity capable customer equipment 20, 110 having a first access interface 44, 121 and a second access interface 45, 122, the access of a multi-connectivity capable customer equipment 20, 110 to a data network 90, 150 and/or to services provided by the data network, wherein the multi-connectivity capable network device 80, 160 comprises at least one access network interface 82, 161 configured to enable connection to a first access network 60, 141 and to a second access network 50, 140, and a network interface 84, 163 configured to enable connection to a data network 90, 150.
Preferably, the multi-connectivity capable network device 80, 160 is configured to centrally control, in response to control instructions, the access of a multi-connectivity capable customer equipment 20, 110 to the data network 90, 150 and/or to services provided by the data network by shaping data traffic provided via the first access network 50, 140 and/or the second access network 60; 141..

In a preferred embodiment, the network device 80; 160 may be configured to shape the data traffic by selecting the first access network 50, 140 and/or the second access network 60; 141 or by blocking the first access network 50, 140 and the second access network 60, 141 to and/or from the multi-connectivity capable customer equipment 20, 110. It should be noted that at least a third access network can be installed between the multi-connectivity capable customer equipment 20, 110 and the network device 80, 160 to still enable the multi-connectivity capable customer equipment 20, 110 to get access to the data network 90, 150.

Preferably, the network device 80, 160 may be configured to shape the data traffic by adjusting the data rate used for the data traffic provided via the first access network 50, 140 and/or the data rate used for the data traffic provided via the second access network 60; 141. Therefore, a programmable data rate scheduler can be implemented in the network device 80, 160, to adjust or adapt the respective data rates in response to predefined parameters, like time parameters and/or access network parameters. Preferably, each data rate is higher than 0 bps.

With other words: The multi-connectivity capable network device 80, 160 is preferably configured to
i) deny, with respect to the at least one multi-connectivity capable customer equipment 20, 110, its access to the data network 90, 150 completely or to
ii) allow, with respect to the at least one multi-connectivity capable customer equipment 20, 110, its access to the data network 90, 150 by using one of the first and second access networks or by using both the first and second access networks. In the latter case, the data rate associated with the first access network and/or the data rate associated with the second access network can be centrally adjusted by the network device 80, 160.

Preferably, the control instructions associated with the customer equipment 20, 110 and its first access interface 44, 121 and second access interface 45, 122, respectively, include service dependent control instructions and/or access network dependent control instructions and/or time based control instructions and/or data volume based control instructions. Service dependent control instructions may comprise a white and/or black list of different services to which access is granted or not. Time based control instructions preferably define at least one time interval during which access is granted or not. Data volume based control instructions preferably define the amount of data to be transmitted from or to the customer equipment 20, 110. Access network dependent control instructions preferable define the access network or access networks to be used by the customer equipment 20, 110 to communicate with the data network 90, 150.

In order to allow, for example, parents to control the control instructions an interface 85, 165 for external configuration of the control instructions may be implemented in the multi-connectivity capable network device 80, 160.

According to a further aspect, a communication system 10, 100 (see Fig. 1 and 2, respectively) is provided for centrally controlling multiple access of a multi-connectivity capable customer equipment 20, 110 to a data network 90, 150 and/or to services provided by the data network. The communication system 10, 100 may comprise the following features:
- a first access network 50, 140 and a second access network 60, 141,
- a multi-connectivity capable network device 80, 160 as set forth above, wherein the at least one access network interface 82, 161 is configured to terminate the first access network 50, 140 and the second access networks 60, 141
- at least one multi-connectivity capable customer equipment 20, 110 comprising a first access interface 44, 121 configured to communicate via the first access network 50, 140 with the multi-connectivity capable network device 80, 160 and a second access interface 45, 122 configured to communicate via the second access network 60, 141, with the multi-connectivity capable network device 80, 160, wherein the multi-connectivity capable network device 80, 160 is configured to centrally control, in response to control instructions stored in the network device 80, 160 and associated with the at least one multi-connectivity capable customer equipment 20, 110, the access of the at least one multi-connectivity capable customer equipment 20, 110 to the data network 90, 150 and/or to services provided by the data network.

Preferably, the at least one customer equipment 20, 110 is configured to control data transmission using the first and/or second access interface 44, 45; 121, 122.

In a preferred embodiment of the communication system 10, the first access network 50 is a wireless access network and the second access network 60 is a fixed access network, wherein
the at least one multi-connectivity capable customer equipment 20 comprises at least one an end user device 30, 31 and a coupling device 40, which are configured to be connected to each other, wherein the first and second access interfaces 44, 45 are implemented in the coupling device 40. This communication system 10 is preferably based on a hybrid access network architecture.

In an alternative preferred embodiment, the first access network 140 is a wireless access network and the second access network 141 is a fixed access network, wherein the at least one customer equipment 110 comprises a mobile end user device 120 and a coupling device 130 connected to the second access network 141, wherein the first and second access interfaces 121, 122 are implemented in the mobile end user 120, wherein the first access interface 122 is configured to communicate via a wireless connection with the coupling device 130 and wherein the second access interface 122 is configured to communicate via the first access network 140.

In order to centrally control a multiple access of the customer equipment 20, 110, the multi-connectivity capable network device 80, 160, is preferably configured to identify the at least one customer equipment 20 110, e.g. a respective identification and the access interfaces implemented in the customer equipment, and to detect, whether the at least one customer equipment 20, 110 is connected to the multi-connectivity capable network device 80, 160 via the first and/or second access network 50, 60; 140, 141.

According to a further exemplary aspect, a communication system 200 is provided for centrally controlling multiple access of a customer equipment 210 to a data network 250 and/or to services provided by the data network, as depicted in Fig. 3. The communication system 200 comprises the following features:
- at least one access network 220,
- a multi connectivity capable network device 240 of an operator network, wherein the multi-connectivity capable network device 240 comprises a network interface 243 for connecting to a data network 250, and wherein the multi-connectivity capable network device 240 terminates the at least one access network 220,
- at least one multi connectivity customer equipment 210 comprising an access interface 212 configured to communicate via at least two independent communication links 260, 261 of the at least one access network 220 with the multi-connectivity capable network device 240, wherein the multi-connectivity capable network device 240 is configured to centrally control, in response to control instructions stored in the network device and associated with the multi-connectivity capable customer device 210, the access of the at least one customer equipment 210 to the data network 250 and/or to services provided by the data network.
Preferably, the at least one customer equipment 210 is configured to control data transmission via the at least two independent communication links 260, 261.

Preferably, the network device 240 is configured to centrally control the access of the multi-connectivity capable customer equipment 210 to the data network 250 and/or to services provided by the data network 250 by shaping data traffic provided via the at least two communication links (260, 261) of the at least one access network (220).

In a preferred embodiment, the network device 240 is configured to shape the data traffic by selecting at least one of the at least two communication links 260, 261 or by blocking the at least two communication links 260, 261 to and/or from the multi-connectivity capable customer equipment 210.

Preferably, the network device 240 may be configured to shape the data traffic by adjusting the data rate used for the data traffic provided via one of the at least two communication links and/or the data rate used for the data traffic provided via the other communication link of the at least two communication links.

Therefore, a programmable data rate scheduler can be implemented in the network device 240, to adjust or adapt the respective data rates preferably in response to predefined parameters, like time parameters and/or access network parameters and or communication link parameters. Preferably, each data rate is higher than 0 bps.

With other words: The multi-connectivity capable network device 240 is preferably configured to
i) deny, with respect to the at least one multi-connectivity capable customer equipment 210, its access to the data network 250 completely or to
ii) allow, with respect to the at least one multi-connectivity capable customer equipment 210, its access to the data network 250 by using at least one of the at least two communication links 260, 261. In the latter case, the data rate associated with one of the at least communication links and/or the data rate associated with the other communication links of the at least one access network can be centrally adjusted by the network device 80, 160.

The control instructions may include service dependent control instructions and/or communication link dependent control instructions and/or time based control instructions and/or data volume based control instructions. Service dependent control instructions may comprise a white and/or black list of different services to which access is granted or not. Time based control instructions preferably define at least one time interval during which access is granted or not. Data volume based control instructions preferably define the amount of data to be transmitted from or to the customer equipment 210. Communication link dependent control instructions preferable define the communication links to be used by the customer equipment 210 to communicate with the data network 250.

In order to centrally control a multiple access of the customer equipment 210, the multi-connectivity capable network device 240 is configured to identify the at least one customer equipment 210, e.g. a respective identification and the access interface implemented in the customer equipment, and to detect, whether the at least one customer equipment is connected to the multi-connectivity capable network device 240 via the at least two communication links 260, 261.

## Claims

1. A multi-connectivity capable network device (80; 160) for centrally controlling multiple access of a multi-connectivity capable customer equipment (20; 110) to a data network (90; 150) and/or to services provided by the data network, wherein
the network device (80; 160) is configured to centrally control, in response to control instructions stored in the network device (80; 160) and associated with a multi-connectivity capable customer equipment (20; 110) having a first access interface (44; 121) and a second access interface (45; 122), the access of the multi-connectivity capable customer equipment (20; 110) to a data network (90; 150) and/or to services provided by the data network, wherein
the multi-connectivity capable network device (80; 160) comprises at least one access network interface (82; 161) configured to enable connection to a first access network (60; 141) and to a second access network (50; 140) and a network interface (84; 163) configured to enable connection to a data network (90; 150).

2. The multi-connectivity capable network device of claim 1,
wherein the control instructions associated with the customer equipment (20; 110) include service dependent control instructions and/or access network dependent control instructions and/or time based control instructions and/or data volume based control instructions.

3. The multi-connectivity capable network device of claim 1 or 2, further comprising
an interface (85; 165) configured to enable an external configuration of the control instructions.

4. The multi-connectivity capable network device of any one of the preceding claims, wherein
the network device (80; 160) is configured to centrally control the access of the multi-connectivity capable customer equipment (20; 110) to the data network (90; 150) and/or to services provided by the data network by shaping data traffic provided via the first access network (50, 140) and/or the second access network (60; 141).

5. The multi-connectivity capable network device of claim 4, wherein
the network device (80; 160) is configured to shape the data traffic by selecting the first access network (50, 140) and/or the second access network 60; 141) or by blocking the first access network (50, 140) and the second access network (60, 141) to and/or from the multi-connectivity capable customer equipment (20, 110).

6. The multi-connectivity capable network device of claim 4 or 5, wherein
the network device (80, 160) is configured to shape the data traffic by adjusting the data rate used for the data traffic provided via the first access network (50, 140) and/or the data rate used for the data traffic provided via the second access network (60; 141).

7. A communication system (10; 100) for centrally controlling multiple access of a multi-connectivity capable customer equipment (20; 110) to a data network (90; 150) and/or to services provided by the data network, the communication system (10; 100) comprising:
- a first access network (50; 140) and a second access network (60; 141),
- a multi-connectivity capable network device (80; 160) according to any one of the claims 1 to 6, wherein the at least one access network interface (82; 161) is configured to terminate the first access network (50; 140) and the second access networks (60; 141),
- at least one multi-connectivity capable customer equipment (20; 110) comprising a first access interface (44; 121) configured to communicate via the first access network (50; 140) with the multi-connectivity capable network device (80; 160) and a second access interface (45; 122) configured to communicate via the second access network (60; 141) with the multi-connectivity capable network device (80; 160),
wherein the multi-connectivity capable network device (80; 160) is configured to centrally control, in response to control instructions stored in the network device (80; 160) and associated with the at least one multi-connectivity capable customer equipment, the access of the at least one multi-connectivity capable customer equipment (20; 110) to the data network (90; 150) and/or to services provided by the data network.

8. The communication system (10) of claim 7, wherein the first access network (50) is a wireless access network and the second access network (60) is a fixed access network, wherein
the at least one multi-connectivity capable customer equipment (20) comprises at least one an end user device (30, 31) and a coupling device (40), which are configured to be connected to each other, wherein the first and second access interfaces (44, 45) are implemented in the coupling device (40).

9. The communication system (100) of claim 7, wherein the first access network (140) is a wireless access network and the second access network (141) is a fixed access network, wherein
the at least one customer equipment (110) comprises a mobile end user device (120) and a coupling device (130) connected to the second access network (141), wherein the first and second access interfaces (121, 122) are implemented in the mobile end user (120), wherein the first access interface (122) is configured to communicate via a wireless connection with the coupling device (130) and wherein the second access interface (122) is configured to communicate via the first access network (140).

10. The communication system (10; 100) of any one of the claims 7 to 9,
wherein the multi-connectivity capable network device (80; 160) is configured to identify the at least one customer equipment (20; 110) and to detect, whether the at least one customer equipment (20; 110) is connected to the multi-connectivity capable network device (80; 160) via the first and/or second access network (50, 60; 140, 141).

11. A communication system (200) for centrally controlling multiple access of a customer equipment (210) to a data network (250) and/or to services provided by the data network, the communication system comprising:
- at least one access network (220),
- a multi connectivity capable network device (240) of an operator network, wherein the multi-connectivity capable network device (240) comprises a network interface (243) for connecting to a data network (250), and wherein the multi-connectivity capable network device (240) terminates the at least one access network (220),
- at least one multi connectivity customer equipment (210) comprising an access interface (212) configured to communicate via at least two independent communication links (260, 261) of the at least one access network (220) with the multi-connectivity capable network device (240),
wherein the multi-connectivity capable network device (240) is configured to centrally control, in response to control instructions stored in the network device and associated with the multi-connectivity capable customer device (210), the access of the at least one customer equipment (210) to the data network (250) and/or to services provided by the data network.

12. The communication system of claim 11,
wherein the control instructions associated with the at least two communication links include service dependent control instructions and/or communication link dependent control instructions and/or time based control instructions and/or data volume based control instructions.

13. The communication system of claim 11 or 12,
wherein the multi-connectivity capable network device (240) is configured to identify the at least one customer equipment (210) and to detect, whether the at least one customer equipment is connected to the multi-connectivity capable network device (240) via the at least two communication links (260, 261).

14. The communication system of any one of the preceding claims 11 to 13, wherein
the network device (240) is configured to centrally control the access of the multi-connectivity capable customer equipment (210) to the data network (250) and/or to services provided by the data network by shaping data traffic provided via the at least two communication links (260, 261) of the at least one access network (220).

15. The communication system of claim 14, wherein
the network device (240) is configured to shape the data traffic by selecting at least one of the at least two communication links (260, 261) or by blocking the at least two communication links (260, 261) to and/or from the multi-connectivity capable customer equipment (210).

16. The communication system of claim 14 or 15, wherein the network device (240) is configured to shape the data traffic by adjusting the data rate used for the data traffic provided via one of the at least two communication links and/or the data rate used for the data traffic provided via the other communication link of the at least two communication links.
